Europäisches Patentamt

European Patent Office

Office européen des brevets

(19)

(11) **EP 0 573 697 B1**

(12) **EUROPÄISCHE PATENTSCHRIFT**

(45) Veröffentlichungstag und Bekanntmachung des Hinweises auf die Patenterteilung:
**22.01.1997  Patentblatt 1997/04**

(51) Int Cl.⁶: **G01S 7/48**, G01S 17/02

(21) Anmeldenummer: **92118999.9**

(22) Anmeldetag: **06.11.1992**

(54) **Lichtelektrische Vorrichtung zum Orten von Hindernissen**

Electro-optical device for locating obstacles

Dispositif électro-optique pour la localisation d'obstacles

(84) Benannte Vertragsstaaten:
**CH DE FR GB IT LI SE**

(30) Priorität: **12.06.1992  DE 4219260**

(43) Veröffentlichungstag der Anmeldung:
**15.12.1993  Patentblatt 1993/50**

(73) Patentinhaber: **Leuze electronic GmbH + Co.
D-73277 Owen (DE)**

(72) Erfinder:
 • **Argast, Martin
  W-7435 Hülben (DE)**
 • **Mast, Gernot
  W-7315 Weilheim/T. (DE)**

(56) Entgegenhaltungen:
EP-A- 0 189 217          DE-C- 3 629 715
DE-C- 3 908 273          GB-A- 2 176 668

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine lichtelektrische Vorrichtung zum Orten von in eine beliebig gestaltete Randform aufweisende Abtastfläche eindringenden Hindernissen mit einem Sender, einem ortsauflösenden Detektor und einer Ablenkvorrichtung, die eine periodische Bewegung ausführt, so daß ein vom Sender ausgesandter Sendelichtstrahl und ein von einem Hindernis reflektierter, auf dem Detektor auftreffender Empfangslichtstrahl, die über die Ablenkvorrichtung geführt sind, die Abtastfläche überstreichen, wobei die Ablenkvorrichtung einen Meßwertgeber zur Bestimmung der Winkellage des Sendelichtstrahls aufweist und die Signale des ortsauflösenden Detektors und des Meßwertgebers einer Auswerteeinheit zugeführt werden, und wobei mittels einer Testmessung die Funktionsfähigkeit des Senders und des Detektors überprüfbar ist, indem der Sendelichtstrahl über ein Testobjekt dem Detektor zugeführt wird.

Eine Vorrichtung dieser Art ist aus der DE-PS 39 08 273 bekannt. Zur Durchführung von Testmessungen werden diverse Testkomponenten außerhalb der lichtelektrischen Vorrichtung in der Abtastfläche angeordnet. Die Testkomponenten bestehen im wesentlichen aus an verschiedenen Orten angeordneten Reflektoren, Testsendern und Absorbern, mit denen separate Testmessungen durchgeführt werden.

Nachteilig an dieser Anordnung ist zum einen, daß die Testkomponenten in bestimmten Winkelsegmenten der Abtastfläche angeordnet sind, so daß in diesen Winkelsegmenten keine Ortung mehr erfolgen kann. Je mehr Testkomponenten verwendet werden, umso mehr wird der für die Ortung zur Verfügung stehende Teil der Abtastfläche reduziert.

Ein weiterer Nachteil dieser Anordnung besteht darin, daß die Positionen der Testkomponenten relativ zur lichtelektrischen Vorrichtung zur Anpassung an verschiedene Anwendungsfälle variiert werden. Dieses Verfahren ist zeitaufwendig und erfordert einen beträchtlichen Aufwand an Justier- und Einstellarbeiten. Desweiteren besteht die Gefahr, daß während des Betriebs der lichtelektrischen Vorrichtung die Testkomponenten durch unsachgemäße Behandlung dejustiert werden können. Da die Testkomponenten außerhalb der lichtelektrischen Vorrichtung angeordnet sind, kann diese Dejustierung beispielsweise durch unabsichtliches Berühren durch Personen erfolgen, die die Bedeutung dieser Testkomponenten nicht kennen.

Der Erfindung liegt die Aufgabe zugrunde, eine Testeinheit zur Funktionsüberprüfung einer lichtelektrischen Ortungsvorrichtung platzsparend und störungsunempfindlich auszubilden, wobei die Testmessung die Ortung nicht beeinträchtigt.

Diese Aufgabe wird erfindungsgemäß dadurch gelöst, daß das Testobjekt außerhalb der Abtastfläche angeordnet und ortsfest bezüglich Sender und Detektor innerhalb der lichtelektrischen Vorrichtung installiert ist.

Ein wesentlicher Vorteil dieser Anordnung besteht darin, daß das Testobjekt in die lichtelektrische Vorrichtung integriert ist und damit gegen ein ungewolltes Dejustieren oder gegen Beschädigungen weitgehend geschützt ist.

Hierzu weist die lichtelektrische Vorrichtung ein Gehäuse auf, dessen Abmessungen im wesentlichen durch die Abstände zwischen Sender, Detektor und der Ablenkvorrichtung vorgegeben sind. Das Testobjekt ist ohne zusätzlichen Raumaufwand innerhalb des Gehäuses so angeordnet, daß der über das Testobjekt geführte Sendelichtstrahl vollständig innerhalb des Gehäuses geführt ist. Dabei kann das Testobjekt seitlich versetzt zum Sender und Detektor angeordnet sein, wobei die Längsachse des Testobjekts parallel zur Verbindungslinie zwischen Sender und Detektor verläuft. Die Längsausdehnung des Testobjekts kann kleiner als der Abstand von Sender und Detektor sein.

Mit der erfindungsgemäßen Vorrichtung kann beispielsweise eine Reduzierung der Sendeleistung, die aufgrund von externen Temperatureinflüssen oder Alterungsprozessoren des Senders auftreten kann, quantitativ erfaßt werden, da die Beschaffenheit des Testobjekts auch über große Zeiträume nicht verändert wird. Zudem können über die Testmessung bei einem Totalausfall des Senders oder Detektors Notstop-Einrichtungen aktiviert werden. Mit derartigen Selbsttestfunktionen können insbesondere die im Bereich des Personenschutzes gestellten Sicherheitsanforderungen erfüllt werden.

Um zu gewährleisten, daß zumindest ein Teil des über das Testobjekt geführten Lichts in den Detektor gelangt, wird an dem dem Detektor zugewandten Ende des Testobjekts das Sendelicht diffus gestreut oder reflektiert, bevor es auf die Ablenkvorrichtung trifft. Damit ein möglichst großer Anteil des Sendelichts auf den Detektor auftrifft, ist das Testobjekt in unmittelbarer Umgebung des Senders und des Detektors angeordnet.

Der Sender kann insbesondere als Laserdiode ausgebildet sein, wobei die Signalauswertung im Detektor als in Form einer Phasenmessung erfolgen kann. In diesem Fall können Sender und Detektor koaxial angeordnet sein.

In einer weiteren vorteilhaften Ausführungsform sind der Sender, der Detektor und das Testobjekt in einer senkrecht zur Abtastrichtung verlaufenden Ebene in Abstand zueinander angeordnet.

In dieser Anordnung wird der Sendelichtstrahl entlang einer Abtastebene geführt. Je nach Ausbildungsform der Ablenkvorrichtung wird der Sendelichtstrahl während eines bestimmten Teils der Periodendauer der Bewegung der Ablenkvorrichtung über die Abtastebene geführt.

Die Hinderniserkennung erfolgt zweckmäßigerweise in Form einer Triangulationsmessung, so daß der Sender und der Detektor nicht koaxial angeordnet sind. Zweckmäßigerweise ist der Sendelichtstrahl während der Testmessung über die Ablenkvorrichtung zum Testobjekt und von diesem wiederum über die Ablenkvorrichtung in den Detektor geführt.

Da das Testobjekt in derselben Ebene angeordnet ist, in der sich auch der Sender und der Detektor befinden, wird das Testobjekt nur dann aktiviert, wenn die Ablenkvorrichtung in Richtung des Senders und Detektors zeigt.

In dieser Stellung der Ablenkvorrichtung kann keine Ortungsmessung durchgeführt werden, da der Sendelichtstrahl innerhalb der lichtelektrischen Vorrichtung geführt ist. Dadurch gelingt es, den für die Ortung nicht nutzbaren Winkelbe reich der Ablenkvorrichtung zur Durchführung der Testmessung zu nutzen.

Zweckmäßigerweise besteht die Ablenkvorrichtung aus einem mit einem Motor angetriebenen Polygonspiegelrad, dessen Drehachse parallel zur Längsachse des Testobjekts verläuft. Der Sende- und Empfangslichtstrahl werden über dieselbe Fläche des Polygonspiegelrads geführt. Zur Testmessung wird der Sendelichtstrahl vom Polygonspiegel reflektiert, trifft auf das dem Sender zugewandte Ende des Testobjekts und wird dort abgelenkt. Der Sendelichtstrahl wird dann entlang des Mittelstücks des Testobjekts geführt, an dessen dem Detektor zugewandten Ende abgelenkt und über das Polygonspiegelrad in den Detektor geführt.

Damit die Testmessung durch direkt vom Sender in den Detektor gelangendes Sendelicht nicht verfälscht wird, ist zwischen Sender und Detektor ein an der Gehäusewand ausmündender, parallel zur Abtastfläche verlaufender Gehäusevorsprung angeordnet. Um zusätzlich mehrfach an der Gehäusewand reflektierte Sendelichtstrahlen auszublenden, füllt der Gehäusevorsprung den Zwischenraum zwischen der Ablenkvorrichtung und der Gehäusewand nahezu vollständig aus und grenzt unmittelbar an das Testobjekt an.

Die Dauer der Testmessung ist im wesentlichen durch die Ausdehnung des Testobjekts in Bewegungsrichtung des Sendelichtstrahls und die Geschwindigkeit der Ablenkvorrichtung des Sendelichtstrahls gegeben. Weitere vorteilhafte Ausbildungen des Testobjekts sind in den abhängigen Ansprüchen beschrieben.

Die erfindungsgemäße Vorrichtung wird im nachstehenden anhand der Zeichnung erläutert. Es zeigen:

Fig. 1    die in einem Gehäuse integrierte lichtelektrische Vorrichtung in Draufsicht

Fig. 2-4    verschiedene Ausführungsbeispiele der lichtelektrischen Vorrichtung in schematischer Darstellung

Fig. 5    ein Zustandsdiagramm des Senders

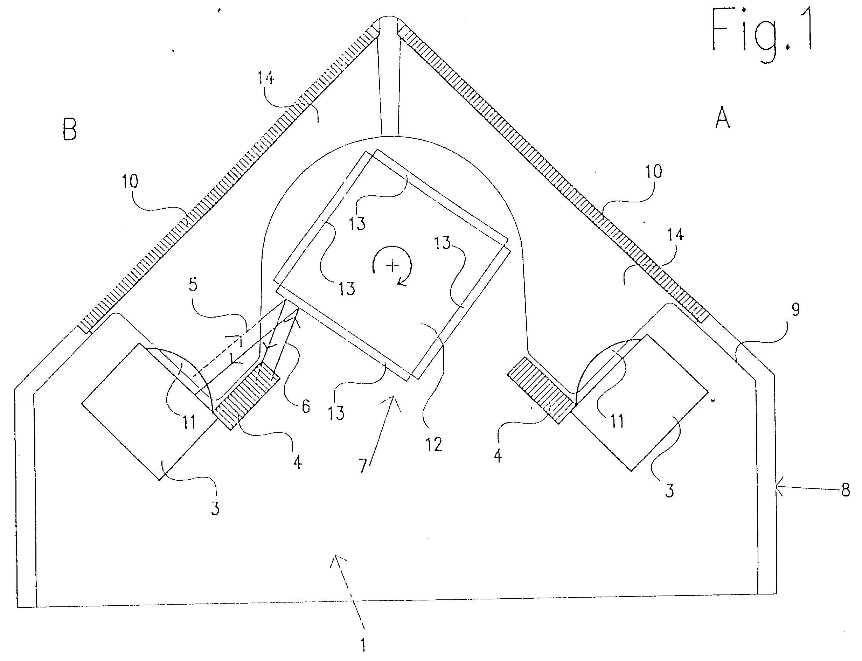

In Fig. 1 ist eine lichtelektrische Vorrichtung (1) zum Orten von in den Zeichnungen nicht dargestellten Hindernissen dargestellt, die aus zwei separaten Untereinheiten besteht. Jede Untereinheit weist jeweils einen Sender (2), einen Detektor (3) und ein Testobjekt (4) auf. Die von den Sendern (2) ausgesandten Sendelichtstrahlen (5) und die von einem Hindernis reflektierten, im Detektor (3) registrierten Empfangslichtstrahlen (6) werden über eine Ablenkvorrichtung (7) geführt. Durch eine Drehbewegung der Ablenkvorrichtung (7) bezüglich ihrer Längsachse überstreichen die Sendelichtstrahlen (5) eine Abtastfläche, im vorliegenden Fall eine Halbkreisfläche von 180°, wobei jeder Sendelichtstrahl (5) eines Senders jeweils einen Bereich (A, B) von 90° überstreicht.

Die an den Detektoren (3) empfangenen Signale sind proportional zum Abstand der Hindernisse von den Detektoren (3). Diese Signale werden zusammen mit der aktuellen Winkellage der Ablenkvorrichtung (7), die mit einem nicht dargestellten Meßwertgeber bestimmt wird, einer ebenfalls nicht dargestellten Auswerteeinheit zugeführt. Dabei werden die von den beiden Untereinheiten übertragenen Informationen zentral ausgewertet.

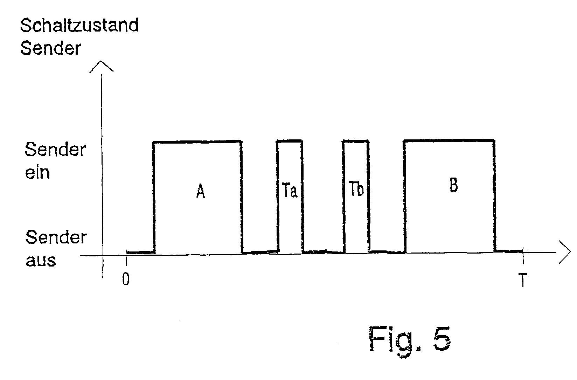

Diese Auswertung erfolgt in zwei Abschnitten. Während des ersten Abschnittes werden die Sendelichtstrahlen (5) über die Abtastfläche geführt und die Signalwerte von den Detektoren (3) und dem Meßwertgeber in die Auswerteeinheit eingelesen. Während dieses Abschnittes ist entweder der erste oder der zweite Sender aktiviert. Dies ist in Fig. 5 mit den Bereichen A und B dargestellt. Während des zweiten Abschnitts werden die Signalwerte aufbereitet und ausgewertet. Dabei sind beide Sender deaktiviert.

Die lichtelektrische Vorrichtung (1) ist in einem Gehäuse (8) integriert, dessen Abmessungen im wesentlichen durch die Abstände der Sender (2), Detektoren (3) und der Ablenkvorrichtung (7) gegeben sind. Die Gehäusewand ist lichtundurchlässig und weist je ein Austrittsfenster (10) für die Sende- (5) und Empfangslichtstrahlen (6) auf.

Die Testobjekte (4) sind so angeordnet, daß kein zusätzlicher Platzbedarf entsteht. Zudem sind die Testobjekte (4) außerhalb der Abtastfläche so angeordnet, daß die über das Testobjekt (4) geführten Sendelichtstrahlen (5) vollständig innerhalb des Gehäuses (8) geführt sind. Dies ist besonders bei Verwendung von Sendern (2) mit hoher Ausgangsleistung von Bedeutung. Ein während der Testmessung aus dem Gehäuse (8) austretender Sendelichtstrahl (5) könnte sonst zu Augenschädigungen einer durch eines der Austrittsfenster (10) des Gehäuses (8) blickenden Person führen.

Die Sendelichtstrahlen (5) sind während dieses Abschnitts außerhalb der Abtastfläche geführt, so daß keine neuen Signalwerte aufgenommen werden. In diesem Abschnitt wird zur Funktionsüberprüfung der Sender (2) und Detektoren (3) eine Testmessung durchgeführt. Hierzu wird in jeder Untereinheit der Sendelichtstrahl (5) über ein Testobjekt (4) und die Ablenkvorrichtung (7) dem Detektor (3) zugeführt.

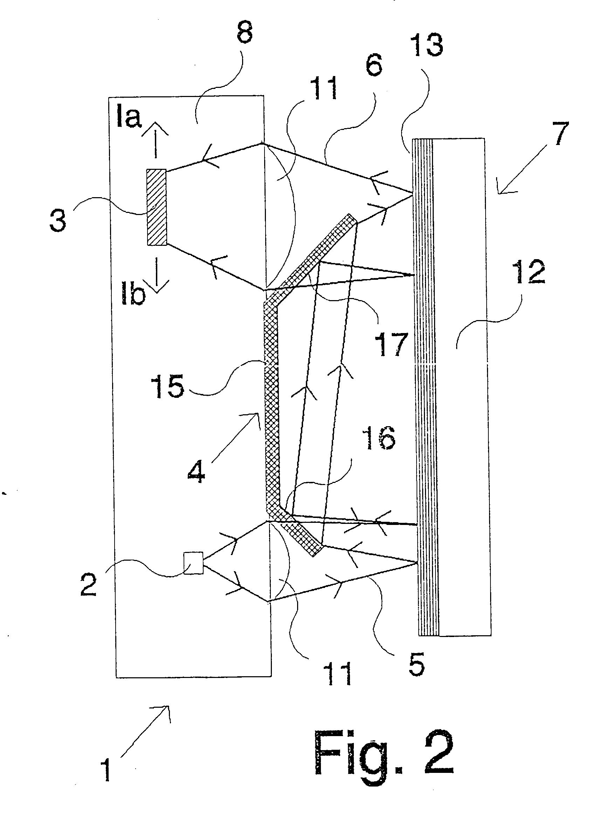

Wie aus den Figuren 2 - 4 ersichtlich weisen der Sender (2) und der Detektor (3) jeweils eine Fokussieroptik (11) auf, die mit dem Testobjekt (4) im wesentlichen in einer gemeinsamen senkrecht zur Abtastvorrichtung verlaufenden Ebene in Abstand zueinander angeordnet sind. Die Ortung der Hindernisse erfolgt mittels einer Triangulationseinheit. Hierzu ist der Sender (2) vorzugsweise als LED, der Detektor (3) als eine positionsempfindliche Diode (PSD) ausgebildet.

Je nach Abstand des Hindernisses zum Detektor trifft das Empfangslicht auf einer bestimmten Stelle der PSD auf. In Abhängigkeit des Auftreffpunktes des Empfangslichts auf der PDS ergibt sich ein bestimmtes Verhältnis der Ströme $I_a$ und $I_b$ an den Enden der PSD, aus dem ein zum Abstand von Hindernis und Detektor (3) proportionales Signal abgeleitet werden kann.

Das Testobjekt (4) ist seitlich versetzt zum Sender (2) und zum Detektor (3) angeordnet. Die Längsachse des Testobjekts (4) verläuft parallel zur Verbindungslinie zwischen Sender (2) und Detektor (3) und parallel zur Drehachse der Ablenkvorrichtung (7). Die Ablenkvorrichtung (7) besteht aus einem mit einem nicht dargestellten Motor angetriebenen Polygonspiegelrad (12) mit vier im rechten Winkel zueinander angeordneten Facetten (13).

Der Sendelichtstrahl (5) und der Empfangslichtstrahl (6) einer Untereinheit werden über dieselbe Facette (13) des Polygonspiegelrads (12) geführt. Bei der Testmessung wird der vom Sender (2) ausgesandte Sendelichtstrahl (5) am Polygonspiegelrad (12) gespiegelt und trifft auf das dem Sender (2) zugewandte Ende des Testobjekts (4), wird entlang des Mittelstücks geführt und verläßt das Testobjekt (4) am dem Detektor (3) zugewandten Ende.

An diesem Ende wird der Sendelichtstrahl (5) diffus reflektiert oder gestreut, so daß der Sendelichtstrahl (5) aufgeweitet wird, bevor er ein zweites Mal zum Polygonspiegelrad (12) reflektiert wird. Durch diese Maßnahme ist gewährleistet, daß auch dann zumindest ein für die Signalauswertung ausreichender Teil des Sendelichts in den Detektor (3) gelangt, wenn die lichtelektrische Vorrichtung (1) eine geringe Fehljustierung aufweist.

Um den Strahlengang möglichst einfach zu gestalten und die Empfangsleistung zu maximieren, ist das Testobjekt (4) in unmittelbarer Nähe des Senders (2) und Detektors (3) angeordnet, wobei die Längsausdehnung des Testobjekts (4) geringfügig kleiner als der Abstand zwischen Sender (2) und Detektor (3) ist.

Damit allein das über das Testobjekt (4) geführte Sendelicht in den Detektor (3) gelangt, ist zwischen den Sendern (2) und den Detektoren (3) ein an der Gehäusewand (9) ausmündender lichtundurchlässiger Gehäusevorsprung (14) angeordnet. Der Gehäusevorsprung (14) füllt den Zwischenraum zwischen Ablenkvorrichtung (7) und der Gehäusewand (9) nahezu vollständig aus und grenzt unmittelbar an die Testobjekte (4) an.

Der Abstand des Gehäusevorsprungs (14) zu den Testobjekten (4) ist möglichst klein gewählt, damit die Störlichteinwirkungen möglichst effektiv unterdrückt werden können. Eine untere Grenze für den Abstand ergibt sich durch die Bedingung, daß die Strählführung entlang des Testobjekts (4) durch den Gehäusevorsprung (14) nicht beeinträchtigt werden darf.

Das in Fig. 2 dargestellte Testobjekt (4) besteht im wesentlichen aus einem Metall- oder Kunststoffstreifen (15), der an der Gehäusewand (9) befestigt ist. Die Enden des Testobjekts (4) weisen je eine in einem Winkel von kleiner als 90° zur Ablenkvorrichtung (7) geneigte Reflektorfläche (16, 17) auf.

Diese Winkel sind so gewählt, daß das auf der dem Sender (2) zugewandten Reflektorfläche (16) auftreffende Sendelicht umgelenkt und entlang des Mittelstücks des Testobjekts geführt wird. Dabei wird das Sendelicht an der Reflektorfläche (16) zweckmäßigerweise gerichtet reflektiert, damit ein möglichst großer Anteil des Sendelichts auf die Reflektorfläche (17) auftrifft. Die Reflektorfläche (17) weist eine diffus reflektierende Oberfläche auf, so daß der Sendelichtstrahl (5) aufgeweitet wird.

Damit wird für die darauffolgende Spiegelung des Sendelichtstrahls (5) an der Ablenkvorrichtung (7) gewährleistet, daß zumindest ein Teil des Sendelichts in den Detektor (3) geführt wird.

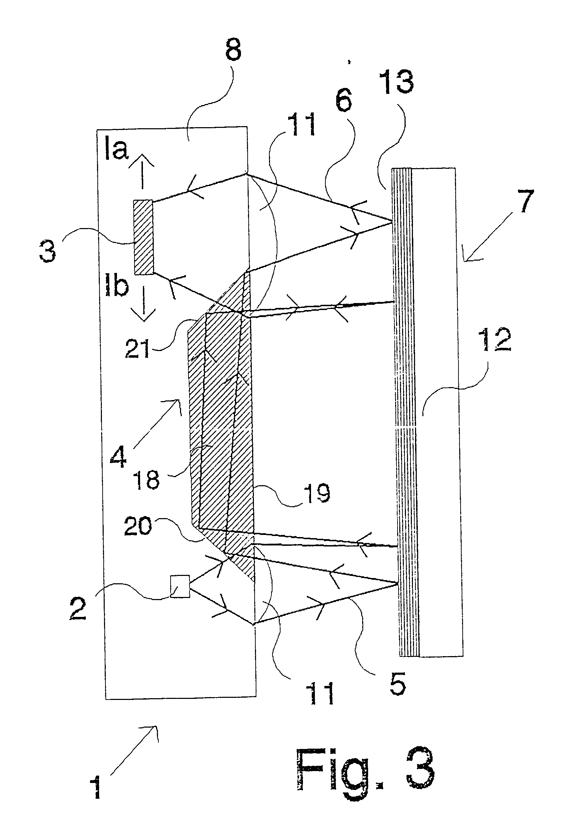

In dem in Fig. 3 dargestellten Ausführungsbeispiel ist das Testobjekt (4) als Prisma (18) ausgebildet, das einen trapezförmigen Querschnitt aufweist und dessen Basisfläche (19) der Ablenkvorrichtung (7) zugewandt ist. Das Prisma (18) besteht vorzugsweise aus Plexiglas.

Der Sendelichtstrahl (5) wird an den in einem Winkel von kleiner als 90° zur Ablenkvorrichtung (7) geneigten Seitenwänden (20, 21) des Prismas (18) umgelenkt und im Innern des Prismas (18) geführt. Die Seitenwände (20, 21) sind verspiegelt, wobei die Spiegelung des Sendelichtstrahls (5) an der dem Sender (2) zugewandten Seitenwand (20) diffus oder gerichtet erfolgen kann, während die Spiegelung an der dem Detektor (3) zugewandten Seitenwand (21) zur Aufweitung des Sendelichtstrahls (5) diffus erfolgt.

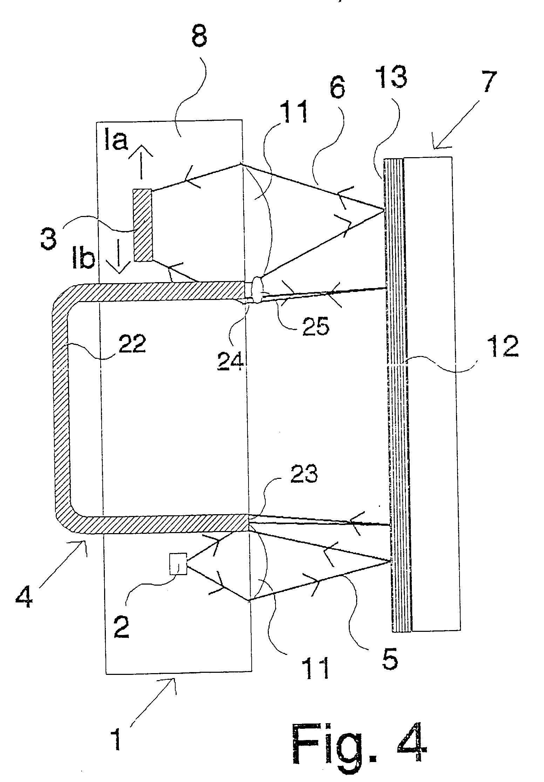

Das in Fig. 4 dargestellte Testobjekt (4) besteht aus einem Lichtfaserbündel (22), das im Gehäuse (8) verläuft, dessen Stirnflächen (23, 24) aus dem Gehäuse (8) hervorstehen und zur Ablenkvorrichtung (7) hin gewandt sind. Der Sendelichtstrahl (5) wird über die dem Sender (2) zugewandten Stirnfläche (23) in das Lichtfaserbündel (22) eingekoppelt und tritt an der zweiten Stirnfläche (24) auf der zur Aufweitung des Sendelichtstrahls (5) ein das Licht diffus streuender Aufsatz (25) aufgebracht ist, aus dem Lichtfaserbündel (22) wieder aus.

In Fig. 5 ist der Schaltzustand der beiden Sender (2) der lichtelektrischen Vorrichtung (1) während der einzelnen Zeitabschnitte der Bewegung der Ablenkvorrichtung (7) bzw. der beiden Sendelichtstrahlen (5) dargestellt.

Die Gesamtdauer einer Periode der Bewegung der Ablenkvorrichtung (7) beträgt T. Während der mit A bzw. B gekennzeichneten Intervalle ist jeweils nur der erste bzw. der zweite Sender (2) zur Durchführung der Ortungsmessungen eingeschaltet. Im Verlauf der Intervalle A und B überstreichen die Sendelichtstrahlen (5) jeweils einen Kreisbogen von 90° , so daß insgesamt von den beiden Sendelichtstrahlen (5) die Abtastfläche eines Halbkreisbogens überstrichen wird.

Während der zweiten Hälfte der Periode der Abtastbewegung bleiben die Sender (2) größtenteils ausgeschaltet. Während dieser Zeit erfolgt die Auswertung der von den Sendern (2) augenommenen Daten. Eine Ortung kann während dieser Zeit nicht durchgeführt werden, da die Sendelichtstrahlen (5) im Innern des Gehäuses (6) geführt sind. Da die Testobjekte (4) im Innern des Gehäuses (8) angeordnet sind, können die Testmessungen während der für die Auswertung genutzten Intervalle erfolgen und beeinträchtigen somit nicht die Ortungsmessungen. Die Testmessungen für den ersten bzw. zweiten Sender (2) erfolgen während des Interwalls $T_a$ bzw. $T_b$.

Die Längen der Intervalle der Testmessungen ($T_a$, $T_b$) sind im wesentlichen durch die Ausdehnung des Testobjekts (4) in Bewegungsrichtung des Sendelichtstrahls (5) und die Geschwindigkeit der Ablenkbewegung des Sendelichtstrahls (5) gegeben.

Zur Durchführung der Testmessung werden die an den Längsenden der positionsempfindlichen Diode (PSD) aufgrund des auftreffenden Empfangslichts fließenden Ströme $I_a$ und $I_b$ ausgewertet. Zur Bewertung der Ströme $I_a$ und $I_b$ sind im Sender (2) zwei Pegel $P_{ein}$ und $P_{aus}$ definiert. Liegen die Stromstärken von $I_a$ und $I_b$ oberhalb des Pegels $P_{ein}$, so ist der Sender (2) eingeschaltet, liegen sie unterhalb des Pegels $P_{aus}$, so ist der Sender (2) ausgeschaltet.

In der Auswerteeinheit wird überprüft, ob im ein - bzw. ausgeschalteten Zustand des Sender (2) die Ströme $I_a$ und $I_b$ oberhalb $P_{ein}$ bzw. unterhalb $P_{aus}$ liegen. Ist dies nicht der Fall, so wird eine Fehlermeldung ausgegeben.

Die Überprüfung von $P_{ein}$ erfolgt während der Testmessungen, die Überprüfung von $P_{aus}$ erfolgt im ausgeschalteten Zustand der Sender (2). Um ein sicheres Ansprechen eines Senders (2) zu gewährleisten, muß dessen Nennleistung signifikant höher als der Pegel $P_{ein}$ sein und andererseits der Pegel $P_{aus}$ in ausreichendem Abstand oberhalb der mittleren Rauschleistung des Senders (2) liegen. Ferner kann während der Testmessung überprüft werden, ob das Sendelicht auf den Detektor (3) auftrifft. Ist dies der Fall, so gilt für das Verhältnis von $I_a$ und $I_b$

$$\frac{I_a}{I_b} \approx 1.$$

Durch die Auswertung des genauen Betrags des Verhältnisses von $I_a$ und $I_b$ kann überprüft werden, ob der gesamte Detektor (3) ausgeleuchtet wird. Dies muß bei einem fehlerfreien Verlauf der Testmessung der Fall sein, da das Testobjekt (4) im Nahbereich des Detektors (3) angeordnet ist.

Das Verhältnis $I_a / I_b$ kann zudem zur Überprüfung herangezogen werden, ob eine der beiden Stromzuleitungen der PSD unterbrochen ist. Ist dies der Fall, so ist $I_a / I_b \gg 1$ oder $I_b, I_a \gg 1$.

## Patentansprüche

1. Lichtelektrische Vorrichtung zum Orten von in eine beliebig gestaltete Randform aufweisende Abtastfläche eindringenden Hindernissen mit einem Sender (2), welcher Sendelichtstrahlen (5) emittiert, die die Abtastfläche überstreichen, einem ortsauflösenden Detektor (3), einer Auswerteeinheit, in der die Signale des Detektors ausgewertet werden, und einem innerhalb eines vorgegebenen Winkelbereichs im Strahlengang des Sendelichtstrahls angeordneten Testobjekt (4), wobei ein definierter Teil des auf das Testobjekt treffenden Sendelichts zum Detektor (3) gelangt und die dort registrierte Lichtmenge in der Auswerteeinheit zur Überprüfung der Funktionsfähigkeit des Senders und des Detektors ausgewertet wird, dadurch gekennzeichnet, daß die Sendelichtstrahlen (5) über eine eine periodische Bewegung ausführende Ablenkvorrichtung (17) geführt sind, wobei die Ablenkvorrichtung (7) zur Bestimmung der Winkellage des Sendelichtstrahls (5) einen Meßwertgeber aufweist, dessen Signale der Auswerteeinheit zugeführt werden, daß die lichtelektrische Vorrichtung (1) in einem Gehäuse (8) integriert ist, dessen Abmessungen im wesentlichen durch die Abstände zwischen Sender (2), Detektor (3) und der Ablenkvorrichtung (7) vorgegeben sind, daß ein von einem Hindernis reflektierter Empfangslichtstrahl (6) über die Ablenkvorrichtung (7) zum Detektor (3) geführt ist, und daß das Testobjekt (4) außerhalb der Abtastfläche innerhalb eines vorgegebenen Winkelbereichs im Gehäuse (8) angeordnet und ortsfest bezüglich Sender (2) und Detektor (3) in der lichtelektrischen Vorrichtung (1) installiert ist, so daß der über das Testobjekt (4) geführte Sendelichtstrahl (5) vollständig innerhalb des Gehäuses (8) geführt ist.

2. Vorrichtung nach Anspruch 1, dadurch gekennzeichnet, daß der Sender (2), der Detektor (3) und das Testobjekt (4) in einer senkrecht zur Abtastebene verlaufenden Ebene in Abstand zueinander angeordnet sind.

3. Vorrichtung nach einem der Ansprüche 1 bis 2, dadurch gekennzeichnet, daß der Sendelichtstrahl (5) während der Testmessung über die Ablenkvorrichtung (7) und das Testobjekt (4) in den Detektor (3) geführt ist.

4. Vorrichtung nach einem der Ansprüche 1 bis 3, dadurch gekennzeichnet, daß das Testobjekt (4) seitlich versetzt zum Sender (2) und zum Detektor (3) angeordnet ist, wobei die Längsachse des Testobjekts (4) parallel zur Verbindungslinie zwischen Sender (2) und Detektor (3) verläuft, und der Abstand von Sender (2) und Detektor (3) größer als die Längsausdehnung des Testobjekts (4) ist.

5. Vorrichtung nach Anspruch 4, dadurch gekennzeichnet, daß die Längsachse des Testobjekts (4) parallel zur Drehachse der aus einem Polygonspiegelrad (12) gebildeten Ablenkvorrichtung (7) verläuft.

6. Vorrichtung nach einem der Ansprüche 4 oder 5, dadurch gekennzeichnet, daß der Sendelichtstrahl (5) auf das dem Sender (2) zugewandte Ende des Testobjekts (4) auftrifft und entlang des Mittelstücks des Testobjekts (4) geführt ist, und daß ein Anteil des an dem dem Detektor (3) zugewandten Ende des Testobjekts (4) austretenden Sendelichts auf dem Detektor (3) auftrifft.

7. Vorrichtung nach Anspruch 6, dadurch gekennzeichnet, daß zwischen Sender (2) und Detektor (3) ein an der Gehäusewand (9) ausmündender, parallel zur Abtastfläche verlaufender lichtundurchlässiger Gehäusevorsprung (14) angeordnet ist, der den Zwischenraum zwischen der Ablenkvorrichtung (7) und der Gehäusewand (9) nahezu vollständig ausfüllt und an das Testobjekt (4) angrenzt.

8. Vorrichtung nach einem der Ansprüche 4 bis 7, dadurch gekennzeichnet, daß die Enden des Testobjekts (4) zwei in einem Winkel von kleiner als 90° zur Ablenkvorrichtung (7) hin geneigte Reflektorflächen (16, 17) aufweisen.

9. Vorrichtung nach Anspruch 8, dadurch gekennzeichnet, daß zumindest die dem Detektor (3) zugewandte Reflektorfläche (17) eine diffus reflektierende Oberfläche aufweist.

10. Vorrichtung nach einem der Ansprüche 4 bis 7, dadurch gekennzeichnet, daß das Testobjekt (4) von einem Prisma (18) gebildet ist, wobei die Enden des Testobjekts (4) von zwei in einem Winkel von kleiner als 90° zur Ablenkvorrichtung (7) hin geneigten Seitenwänden (20, 21) des Prismas (18) gebildet sind.

11. Vorrichtung nach Anspruch 10, dadurch gekennzeichnet, daß zumindest die dem Detektor (3) zugewandte Seitenwand (21) des Prismas (18) eine diffus reflektierende Oberfläche aufweist.

12. Vorrichtung nach einem der Ansprüche 4 bis 7, dadurch gekennzeichnet, daß das Testobjekt (4) von einem Lichtfaserbündel (22) gebildet ist, das zwei zur Ablenkvorrichtung (7) hin gewandte Stirnflächen (23, 24) aufweist.

13. Vorrichtung nach Anspruch 12, dadurch gekennzeichnet, daß zumindest an der dem Detektor (3) zugewandten Stirnfläche (24) des Lichtfaserbündels (22) ein das Licht diffus streuender Aufsatz (25) aufgebracht ist.

14. Vorrichtung nach einem der Ansprüche 1 bis 13, dadurch gekennzeichnet, daß die Dauer ($T_a$, $T_b$) der Testmessung durch die Ausdehnung des Testobjekts (4) in Bewegungsrichtung des Sendelichtstrahls (5) und die Geschwindigkeit der Ablenkbewegung des Sendelichtstrahls (5) gegeben ist.

**Claims**

1. Optoelectronic device for the locating of obstacles penetrating into a scanning area having an edge shape of any form, which device comprises an emitter which emits transmitted light beams which sweep over the scanning area, a location resolving detector, an evaluating unit in which the signals of the detector are evaluated, and a test object arranged within a preset angular range in the beam path of the transmitted light beam, wherein a defined part of the transmitted light incident on the test object gets to the detector and the amount of light registered there is evaluated in the evaluating unit for checking the functional capability of the emitter and the detector, characterised thereby that the transmitted light beams (5) are guided by way of a deflecting device (17) executing a periodic movement, wherein the deflecting device (7) has a measurement value transmitter, the signals of which are fed to the evaluating unit, for determination of the angular position of the transmitted light beam (5), that the optoelectronic device (1) is integrated into a housing (8), the dimensions of which are substantially predetermined by the spacings between emitter (2), detector (3) and the deflecting device (7), that a reception light beam (6) reflected by an obstacle is led to the detector (3) by way of the deflecting device (7), and that the test object (4) is arranged outside the scanning area within a preset angular range in the housing (8) and is installed in stationary location with respect to emitter (2) and detector (3) in the optoelectronic device (1) so that the transmitted light beam (5) guided by way of the test object (4) is conducted entirely within the housing.

2. Device according to claim 1, characterised thereby that the emitter (2), the detector (3) and the test object (4) are arranged at a mutual spacing in a plane extending perpendicularly to the scanning plane.

3. Device according to one of claims 1 and 2, characterised thereby that the transmitted light beam (5) is guided into the detector (3) by way of the deflecting device (7) and the test object (4) during the test measurement.

4. Device according to one of claims 1 to 3, characterised thereby that the test object (4) is arranged laterally displaced relative to the emitter (2) and to the detector (3), wherein the longitudinal axis of the test object (4) runs parallel to the connecting line between emitter (2) and detector (3) and the spacing of emitter (2) and detector (3) is larger than the longitudinal extent of the test object (4).

5. Device according to claim 4, characterised thereby that the longitudinal axis of the test object (4) runs parallel to the axis of rotation of the deflecting device (7), which is formed from a polygon mirror wheel (12).

6. Device according to one of claims 4 or 5, characterised thereby that the transmitted light beam (5) is incident on the end of the test object (4) facing the emitter (2) and is guided along the centre piece of the test object (4), and that a proportion of the transmitted light emerging at the end of the test object (4) facing the detector (3) is incident on the detector (3).

7. Device according to claim 6, characterised thereby that a light-impermeable housing projection (14), which opens out at the housing wall (9), extends parallel to the scanning area, almost completely fills out the intermediate space between the deflecting device (7) and the housing wall (9) and adjoins the test object (4), is arranged between emitter (2) and detector (3).

8. Device according to one of claims 4 to 7, characterised thereby that the ends of the test object (4) have two reflector surfaces (16, 17) inclined relative to the deflecting device (7) at an angle of less than 90°.

9. Device according to claim 8, characterised thereby that at least the reflector surface (17) facing the detector (17) has a surface reflecting diffusely.

10. Device according to one of claims 4 to 7, characterised thereby that the test object (4) is formed by a prism (18), wherein the ends of the test object (4) are formed by two side walls (20, 21) of the prism (18) which are inclined relative to the deflecting device (7) at an angle of less than 90°.

11. Device according to claim 10, characterised thereby that at least the side wall (21) of the prism (18) facing the detector (3) has a surface reflecting diffusely.

12. Device according to one of claims 4 to 7, characterised thereby that the test object (4) is formed by an optical fibre bundle (22), which has two end surfaces (23, 24) facing towards the deflecting device (7).

13. Device according to claim 12, characterised thereby, that an attachment (25) scattering the light diffusely is mounted at least at the end surface (24) of the fibre optical bundle (22) facing the detector (3).

14. Device according to one of claims 1 to 13, characterised thereby that the duration ($T_a$, $T_b$) of the test measurement is given by the extent of the test object (4) in movement direction of the transmitted light beam (5) and the speed of the deflecting movement of the transmitted light beam (5).

**Revendications**

1. Dispositif photo-électrique pour localiser des obstacles pénétrant dans une zone de balayage présentant une forme de contour de configuration quelconque, avec un émetteur qui émet des rayons de lumière émise qui couvrent la zone de balayage, un détecteur de localisation, une unité d'interprétation dans laquelle sont interprétés les signaux du détecteur, et une mire disposée à l'intérieur d'un secteur angulaire prédéfini dans le trajet du rayon de lumière émise, une partie définie de la lumière émise rencontrant la mire atteignant le détecteur et la quantité de lumière qui est enregistrée étant, dans l'unité d'interprétation, interprétée afin de tester la capacité de fonctionnement de l'émetteur et du détecteur, **caractérisé** en ce que les rayons de lumière émise (5) sont dirigés sur un dispositif déflecteur (7) accomplissant un mouvement périodique, le dispositif déflecteur (7) présentant, afin de déterminer la position angulaire du rayon de lumière émise (5), un transducteur dont les signaux sont transmis à l'unité d'interprétation, en ce que le dispositif photo-électrique (1) est incorporé dans un boîtier (8) dont les dimensions sont prédéfinies pour l'essentiel par les distances entre l'émetteur (2), le détecteur (3) et le dispositif déflecteur (7), en ce qu'un rayon de lumière reçue (6) réfléchi par un obstacle est dirigé par le dispositif déflecteur (7) vers le détecteur (3), et en ce que la mire (4) est disposée en dehors de la zone de balayage à l'intérieur d'un secteur angulaire prédéfini dans le boîtier (8) et est installée en position fixe par rapport à l'émetteur (2) et au détecteur (3) dans le dispositif photo-électrique (1), de sorte que le rayon de lumière émise (5) dirigé sur la mire (4) est guidé en totalité à l'intérieur du boîtier (8).

2. Dispositif selon la revendication 1, **caractérisé** en ce que l'émetteur (2), le détecteur (3) et la mire (4) sont disposés à distance les uns des autres dans un plan s'étendant perpendiculairement au plan de balayage.

3. Dispositif selon la revendication 1 ou 2, **caractérisé** en ce que le rayon de lumière émise (5) est, pendant la mesure de test, dirigé sur le détecteur (3) en passant par le dispositif déflecteur (7) et la mire (4).

4. Dispositif selon une des revendications 1 à 3, **caractérisé** en ce que la mire (4) est disposée en décalage latéral par rapport à l'émetteur (2) et au détecteur (3), l'axe longitudinal de la mire (4) s'étendant parallèlement à la ligne de jonction entre l'émetteur (2) et le détecteur (3), et la distance entre l'émetteur (2) et le détecteur (3) étant supérieure à l'étendue longitudinale de la mire (4).

5. Dispositif selon la revendication 4, **caractérisé** en ce que l'axe longitudinal de la mire (4) s'étend parallèlement à l'axe de rotation du dispositif déflecteur (7) constitué par une roue à réflecteur polygonal (12).

6. Dispositif selon la revendication 4 ou 5, **caractérisé** en ce que le rayon de lumière émise (5) rencontre l'extrémité de la mire (4) qui est tournée vers l'émetteur (2) et est dirigé le long de la partie centrale de la mire (4), et en ce qu'une partie de la lumière émise sortant à l'extrémité de la mire (4) qui est tournée vers le détecteur (3) rencontre le détecteur (3).

7. Dispositif selon la revendication 6, **caractérisé** en ce qu'une partie de boîtier en saillie (14), opaque, s'étendant parallèlement à la zone de balayage et se terminant sur la paroi (9) du boîtier, est disposée entre l'émetteur (2) et le détecteur (3), et elle remplit presque totalement l'intervalle entre le dispositif déflecteur (7) et la paroi (9) du boîtier et est limitrophe de la mire (4).

8. Dispositif selon une des revendications 4 à 7, **caractérisé** en ce que les extrémités de la mire (4) présentent deux faces réfléchissantes (16, 17) inclinées vers le dispositif déflecteur (7) sous un angle inférieur à 90°.

9. Dispositif selon la revendication 8, **caractérisé** en ce qu'au moins la face réfléchissante (17), tournée vers le détecteur (3), présente une surface à réflexion diffuse.

10. Dispositif selon une des revendications 4 à 7, **caractérisé** en ce que la mire (4) est constituée par un prisme (18), les extrémités de la mire (4) étant formées par deux parois latérales (20, 21) du prisme (18) qui sont inclinées vers le dispositif déflecteur (7) sous un angle inférieur à 90°.

11. Dispositif selon la revendication 10, **caractérisé** en ce qu'au moins la face latérale (21) du prisme (18), tournée vers le détecteur (3), présente une surface à réflexion diffuse.

12. Dispositif selon une des revendications 4 à 7, **caractérisé** en ce que la mire (4) est constituée par un faisceau de fibres optiques (22), qui présente deux faces frontales (23, 24) tournées vers le dispositif déflecteur (7).

13. Dispositif selon la revendication 12, **caractérisé** en ce qu'un couronnement (25), dispersant la lumière de manière diffuse, est apposé au moins sur la face frontale (24) du faisceau de fibres optiques (22), tournée vers le détecteur (3).

14. Dispositif selon une des revendications 1 à 13, **caractérisé** en ce que la durée ($T_a$, $T_b$) de la mesure de test est déterminée par l'étendue de la mire (4) dans la direction de déplacement du rayon de lumière émise (5) et par la vitesse du mouvement de déflexion du rayon de lumière émise (5).

Fig.1

EP 0 573 697 B1

Fig. 2

Fig. 3

Fig. 4

Fig. 5